# EUROPEAN PATENT SPECIFICATION

(11) **EP 3 470 367 B1**
(45) Date of publication and mention of the grant of the patent: **03.03.2021**
(21) Application number: 17827372.8
(22) Date of filing: 22.06.2017
(51) Int. Cl.: C01B 13/11, H01T 19/00

(54) **OZONE GENERATION DEVICE**
OZONGENERATOR
DISPOSITIF DE GÉNÉRATION D'OZONE

(30) Priority: 14.07.2016 JP 2016139747
(43) Date of publication of application: 17.04.2019
(73) Proprietor: Murata Manufacturing Co., Ltd., Kyoto-fu, Kyoto 617-8555 (JP)
(72) Inventor: NISHIMOTO Keisuke, Nagaokakyo-shi Kyoto 617-8555 (JP); IMAMURA Nobuaki, Nagaokakyo-shi Kyoto 617-8555 (JP); KATO Shinji, Nagaokakyo-shi Kyoto 617-8555 (JP); YAMANA Toshihiko, Nagaokakyo-shi Kyoto 617-8555 (JP); MIYAZAKI Michio, Nagaokakyo-shi Kyoto 617-8555 (JP)
(74) Representative: Herrmann, Uwe
(86) International application number: PCT/JP2017/023069
(87) International publication number: WO 2018/012242

(56) References cited:
- WO-A1-2012/108260
- JP-A- H10 259 004
- JP-A- H11 343 104
- JP-A- 2004 159 753
- JP-A- 2008 251 516
- JP-A- 2011 063 512
- US-A1- 2014 340 810

## Description

### Technical Field

The present invention relates to an ozone generating apparatus that generates ozone through application of an electric field. In particular, the present invention relates to an ozone generating apparatus with a heater.

### Background Art

Various ozone generating apparatuses have hitherto been devised and put to practical use. For example, an ozone generating apparatus described in Patent Document 1 includes a substrate, an insulating layer, a dielectric electrode, a discharge electrode, and a chip resistor. The dielectric electrode is disposed on a front face of the substrate. The insulating layer is disposed on the front face of the substrate so as to cover the dielectric electrode. The discharge electrode is disposed on the front face (a face opposite to the face opposing to the substrate) of the insulating layer. This realizes a configuration in which the discharge electrode is opposed to the dielectric electrode with the insulating layer disposed therebetween. The discharge electrode and the dielectric electrode are connected to a high-voltage high-frequency power supply. Application of voltage for discharge from the high-voltage high-frequency power supply causes discharge between the discharge electrode and the dielectric electrode to generate ozone.

The chip resistor is disposed on a rear face of the substrate. The chip resistor is connected to a heater power supply. The chip resistor generates heat in response to voltage for the heater, which is applied from the heater power supply. The discharge electrode and the dielectric electrode are heated with the heat.

### Citation List

### Patent Document

Patent Document 1: Japanese Unexamined Patent Application Publication No. 8-217411

### Summary of Invention

### Technical Problem

However, with the above configuration, it is necessary to provide the power supply for generating ozone (the high-voltage high-frequency power supply) separately from the power supply for heating (the heater power supply). Accordingly, the ozone generating apparatus is increased in size.

It is an object of the present invention to provide a compact ozone generating apparatus capable of generating ozone and heating the electrodes that generate the ozone. Solution to Problem

An ozone generating apparatus in one aspect of the present invention includes a first discharge electrode and a second discharge electrode that generate ozone through discharge, and a heater electrode. A first end of the heater electrode is connected to the first discharge electrode and a second end of the heater electrode is connected to the second discharge electrode. One power supply applies voltage between the first end and the second end. A current path that connects the first end to the second end through the first discharge electrode and the second discharge electrode is referred to as a first path and a ratio of voltage with respect to current through the first path is referred to as a first resistance value. A current path that connects the first end to the second end through the heater electrode is referred to as a second path and a ratio of voltage with respect to current through the second path is referred to as a second resistance value. The second resistance value is higher than the first resistance value in a voltage range higher than discharge start voltage at which the discharge occurs between the first discharge electrode and the second discharge electrode. In the present description, the connection includes electrical connection.

With the above configuration, the current through the first discharge electrode and the second discharge electrode is higher than the current through the heater electrode in a state in which the discharge occurs. Accordingly, high voltage higher than or equal to the discharge start voltage is supplied from one power supply to the first discharge electrode and the second discharge electrode to stably and concurrently perform the discharge and heating.

In the ozone generating apparatus in one aspect of the present invention, the second resistance value is preferably lower than the first resistance value in a voltage range lower than the discharge start voltage.

With the above configuration, current is capable of being efficiently supplied to the heater electrode in a state in which the discharge does not occur to efficiently perform the heating with the heater electrode.

The ozone generating apparatus in one aspect of the present invention preferably has the following configuration. Each of the first discharge electrode and the second discharge electrode includes multiple electrode fingers. The multiple electrode fingers of the first discharge electrode and the multiple electrode fingers of the second discharge electrode are alternately disposed so as to be opposed to each other along a certain direction.

With the above configuration, the area in which the first discharge electrode is opposed to the second discharge electrode is made large to decrease the discharge start voltage. Accordingly, it is possible to make the resistance value of the heater electrode low to easily form the heater electrode.

The ozone generating apparatus in one aspect of the present invention preferably has the following configuration. The ozone generating apparatus includes a housing and a dielectric layer. The first discharge electrode, the second discharge electrode, and the heater electrode are formed on the housing, which is an insulating housing. The dielectric layer is disposed on a front face of the housing. The first discharge electrode and the second discharge electrode are disposed on the front face of the housing in a shape in which the first discharge electrode and the second discharge electrode are covered with the dielectric layer.

With the above configuration, appropriately selecting the permittivity of the dielectric layer enables control of the discharge start voltage, such as a reduction in the discharge start voltage.

In the ozone generating apparatus in one aspect of the present invention, the heater electrode is preferably formed of a positive temperature coefficient thermistor.

With the above configuration, it is easy to make the resistance value high in the voltage range higher than the discharge start voltage and to make the resistance value low in the voltage range lower than the discharge start voltage. In addition, it is easy to increase the difference between the resistance value in the voltage range higher than the discharge start voltage and the resistance value in the voltage range lower than the discharge start voltage.

In the ozone generating apparatus in one aspect of the present invention, the heater electrode preferably has multiple bending portions.

With the above configuration, the resistance value is capable of being increased without decreasing the thickness of the heater electrode.

Another aspect of the present invention is a method of using the ozone generating apparatus described above, wherein the power supply applies voltage higher than the discharge start voltage

The method in one aspect of the present invention preferably has the following configuration. The power supply alternately has a first period in which voltage higher than the discharge start voltage is applied and a second period in which voltage lower than the discharge start voltage is applied.

With the above configuration, it is possible to concurrently perform the discharge and the heating during a period in which the discharge is required and to efficiently perform only the heating during a period in which the discharge is not required. Advantageous Effects of Invention

According to the present invention, it is possible to realize a compact ozone generating apparatus capable of generating ozone and heating the electrodes that generate the ozone.

### Brief Description of Drawings

[Fig. 1] Fig. 1(A) is a front view of an ozone generating apparatus according to a first embodiment of the present invention and Fig. 1(B) is a rear view of the ozone generating apparatus according to the first embodiment of the present invention.
[Fig. 2] Fig. 2(A) is a cross-sectional view, taken along the A-A line of the ozone generating apparatus according to the first embodiment of the present invention in Fig. 1(A) and Fig. 2(B) is a cross-sectional view, taken along the B-B line of the ozone generating apparatus according to the first embodiment of the present invention in Fig. 1(A).
[Fig. 3] Fig. 3 is a graph representing current-voltage characteristics of the respective components in the ozone generating apparatus according to the first embodiment of the present invention, that is, characteristics of resistance values.
[Fig. 4] Fig. 4 is a functional block diagram of an ozone generating apparatus according to a second embodiment of the present invention.
[Fig. 5] Fig. 5(A) is a front view of an ozone generating apparatus according to a third embodiment of the present invention and Fig. 5(B) is a side cross-sectional view of the ozone generating apparatus according to the third embodiment of the present invention.

### Description of Embodiments

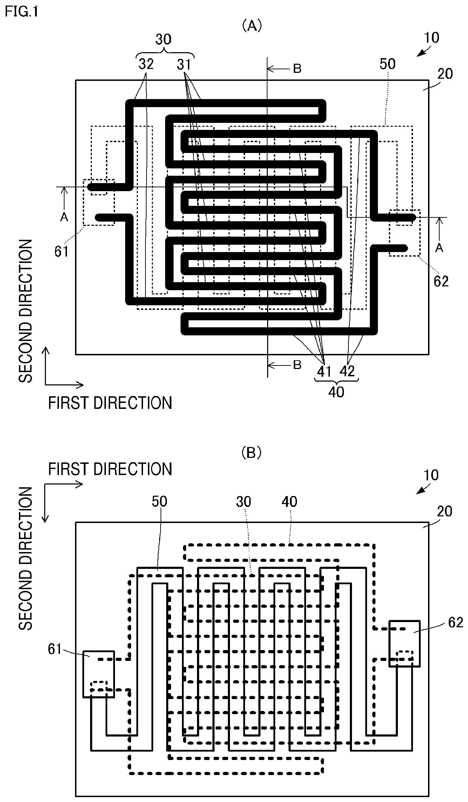

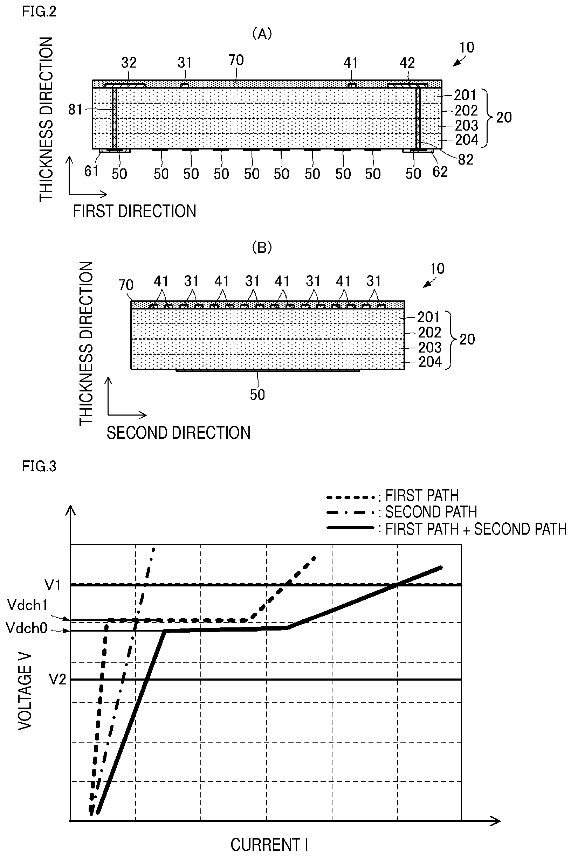

Fig. 1(A) is a front view of an ozone generating apparatus according to a first embodiment of the present invention. Fig. 1(B) is a rear view of the ozone generating apparatus according to the first embodiment of the present invention. Fig. 1(A) is a front view in a state in which insulating layers and a dielectric layer are omitted. Fig. 2(A) is a cross-sectional view, taken along the A-A line of the ozone generating apparatus according to the first embodiment of the present invention in Fig. 1(A). Fig. 2(B) is a cross-sectional view, taken along the B-B line of the ozone generating apparatus according to the first embodiment of the present invention in Fig. 1(A).

As illustrated in Fig. 1(A), Fig. 1(B), Fig. 2(A), and Fig. 2(B), an ozone generating apparatus 10 includes an insulating housing 20, a first discharge electrode 30, a second discharge electrode 40, a heater electrode 50, external connection electrodes 61 and 62, a dielectric layer 70, and interlayer connection electrodes 81 and 82.

The housing 20 has a substantially rectangular parallelepiped shape. The housing 20 is composed of multiple insulating layers 201, 202, 203, and 204 that are laminated to each other. The housing 20 is made of, for example, low temperature sintering ceramics.

The first discharge electrode 30 and the second discharge electrode 40 are formed on a front face of the housing 20. The first discharge electrode 30 and the second discharge electrode 40 are made of a material having high electrical conductivity (for example, RuO₂, Ag, Cu, or Pd).

The first discharge electrode 30 is composed of multiple electrode fingers 31 and multiple wiring electrodes 32. The multiple electrode fingers 31 are disposed in a central area in a first direction and a second direction on the front face of the housing 20.

Each electrode finger 31 is an electrode pattern having a certain width. The electrode finger 31 is composed of first partial electrodes extending in the first direction and a second partial electrode extending in the second direction. The two first partial electrodes are disposed so as to be apart from each other in the second direction. One end portion of one of the two first partial electrodes and one end portion of the other thereof are connected with the second partial electrode. In other words, the first discharge electrode 30 includes multiple bending portions along the way in the extending direction. The multiple electrode fingers 31 are disposed so as to apart from each other in the second direction. The multiple electrode fingers 31 are connected to each other with the electrodes extending in the second direction. The multiple electrode fingers 31 are connected to each other so as to form one line here. With this configuration, the multiple electrode fingers 31 are connected to each other so as to be formed into a substantially meander shape as a whole in a planar view.

Each of the multiple wiring electrodes 32 is connected to the electrode finger 31 at each end in the second direction of the multiple electrode fingers 31. The wiring electrodes 32 are disposed toward one end side, compared with the area where the multiple electrode fingers 31 are formed, in the second direction in a planar view of the front face of the housing 20.

The second discharge electrode 40 is composed of multiple electrode fingers 41 and multiple wiring electrodes 42. The multiple electrode fingers 41 are disposed in a central area in the first direction and the second direction on the front face of the housing 20. In other words, the area where the multiple electrode fingers 41 are formed is partially overlapped with the area where the multiple electrode fingers 31 are formed in the first direction and the second direction on the front face of the housing 20.

Each electrode finger 41 is an electrode pattern having a certain width. The electrode finger 41 preferably has the same width and the same thickness as those of the electrode finger 31. The electrode finger 41 is composed of third partial electrodes extending in the first direction and a fourth partial electrode extending in the second direction. The two third partial electrodes are disposed so as to be apart from each other in the second direction. One end portion of one of the two third partial electrodes and one end portion of the other thereof are connected with the fourth partial electrode. In other words, the second discharge electrode 40 includes multiple bending portions along the way in the extending direction. The multiple electrode fingers 41 are disposed so as to apart from each other in the second direction. The multiple electrode fingers 41 are connected to each other with the electrodes extending in the second direction. The multiple electrode fingers 41 are connected to each other so as to form one line here. With this configuration, the multiple electrode fingers 41 are connected to each other so as to be formed into a substantially meander shape as a whole in a planar view.

Each of the multiple wiring electrode 42 is connected to the electrode finger 41 at each end in the second direction of the multiple electrode fingers 41. The wiring electrodes 42 are disposed toward the other end side, compared with the area where the multiple electrode fingers 41 are formed, in the second direction in a planar view of the front face of the housing 20.

The multiple electrode fingers 41 and the multiple electrode fingers 31 are alternately disposed along the second direction (corresponding to a "certain direction" of the present disclosure). Accordingly, the multiple electrode fingers 41 and the multiple electrode fingers 31 include multiple opposing portions, which have a certain length along the first direction, along the second direction. With this configuration, discharge start voltage generated by the first discharge electrode 30 and the second discharge electrode 40 is capable of being decreased.

The heater electrode 50 is formed on a rear face of the housing 20. The heater electrode 50 is made of a material having desired resistivity (for example, nichrome, W, or RuO₂). Flowing of current through the heater electrode 50 causes the heater electrode 50 to generate heat to heat the first discharge electrode 30 and the second discharge electrode 40. This suppresses corrosion between the first discharge electrode 30 and the second discharge electrode 40.

The area where the heater electrode 50 is formed is overlapped with the area where the first discharge electrode 30 and the second discharge electrode 40 are formed in a planar view of the ozone generating apparatus 10 (the housing 20). Although the area where the heater electrode 50 is formed is preferably overlapped with the area where the first discharge electrode 30 and the second discharge electrode 40 are formed, the area where the heater electrode 50 is formed is not limited to this. Overlapping the area where the heater electrode 50 is formed with the area where the first discharge electrode 30 and the second discharge electrode 40 are formed enables the first discharge electrode 30 and the second discharge electrode 40 to be efficiently heated with the heater electrode 50.

The heater electrode 50 has a shape in which the heater electrode 50 is bent multiple times at positions along the way in the extending direction. For example, the heater electrode 50 has a meander shape. This configuration enables the heater electrode 50 to be lengthened to increase the resistance value while suppressing an increase in the size of the heater electrode 50.

A first end in the extending direction of the heater electrode 50 is connected to the wiring electrode 32 of the first discharge electrode 30 with the interlayer connection electrode 81 interposed therebetween. A second end in the extending direction of the heater electrode 50 is connected to the wiring electrode 42 of the second discharge electrode 40 with the interlayer connection electrode 82 interposed therebetween. The interlayer connection electrodes 81 and 82 are made of a material having certain electrical conductivity and are formed by, for example, solidifying conductive paste containing silver.

The dielectric layer 70 has certain relative permittivity. The dielectric layer 70 covers the front face of the housing 20. Here, the dielectric layer 70 is formed so as to at least cover the area where the first discharge electrode 30 and the second discharge electrode 40 are formed (the central portion of the housing 20 in the second direction). The provision of the dielectric layer 70 enables the discharge start voltage to be further decreased.

The external connection electrodes 61 and 62 are formed on the rear face of the housing 20 and each have a rectangular shape in a planar view. The external connection electrode 61 is formed near one end of the housing 20 in the first direction. The external connection electrode 61 is connected to the first end of the heater electrode 50. The external connection electrode 62 is formed near the other end of the housing 20 in the first direction. The external connection electrode 62 is connected to the second end of the heater electrode 50.

As described above, the external connection electrode 61 and the external connection electrode 62 are end portions common to a current path (a first path) through the first discharge electrode 30 and the second discharge electrode 40 and a current path (a second path) through the heater electrode 50.

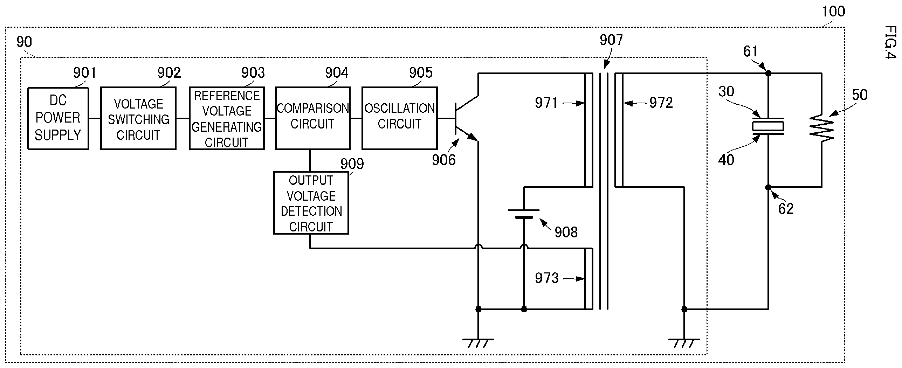

A power supply 90 described below (refer to Fig. 4) is connected to the external connection electrode 61 and the external connection electrode 62. Specifically, the power supply 90 is only one power supply (common power supply) for the current path (the first path) through the first discharge electrode 30 and the second discharge electrode 40 and the current path (the second path) through the heater electrode 50.

With the above configuration, it is not necessary to separately provide a discharge power supply and a heating power supply. Accordingly, it is possible to reduce the size of the ozone generating apparatus capable of generating ozone and heating the electrodes that generate the ozone.

Fig. 3 is a graph representing current-voltage characteristics of the respective components in the ozone generating apparatus according to the first embodiment of the present invention, that is, characteristics of resistance values. Referring to Fig. 3, the horizontal axis represents current I and the vertical axis represents voltage V. Referring to Fig. 3, a broken line indicates the ratio (a first resistance value) of the voltage with respect to the current through the first path (at the side of the first discharge electrode 30 and the second discharge electrode 40), an alternate long and short dash line indicates the ratio (a second resistance value) of the voltage with respect to the current through the second path (at heater electrode 50 side), and a solid line indicates the ratio (a third resistance value) of the voltage with respect to the current through a parallel connection path of the first path and the second path (the configuration itself of the ozone generating apparatus 10).

As illustrated in Fig. 3, the second resistance value is higher than the first resistance value in a voltage region higher than discharge start voltage Vdch1 only through the first path. With this configuration, when the same voltage is applied to the first path and the second path, the current is likely to flow through the first path, compared with the second path, in the voltage region higher than the discharge start voltage Vdch1. Accordingly, the discharge is stably and continuously realized even when the voltage is supplied from one power supply 90 to the first path and the second path. In addition, it is possible to cause certain current to flow through the second path, and the heating with the heater electrode 50 is also reliably realized even when the voltage is supplied from one power supply 90 to the first path and the second path.

Although a slight difference exists between the discharge start voltage Vdch1 only through the first path and discharge start voltage Vdch0 through the parallel connection path of the first path and the second path, the discharge start voltage Vdch1 is substantially the same as the discharge start voltage Vdch0. Accordingly, the second resistance value may be set to a value higher than the first resistance value in the voltage region higher than the discharge start voltage Vdch1.

In addition, as illustrated in Fig. 3, the second resistance value is preferably lower than the first resistance value in a voltage region lower than the discharge start voltage Vdch1. In this case, when the discharge is not performed, the current is capable of being efficiently supplied to the heater electrode 50 and the heating with the heater electrode 50 is made efficient.

Furthermore, continuously performing the heating with the heater electrode 50 enables the corrosion between the first discharge electrode 30 and the second discharge electrode 40 to be effectively suppressed. Efficient heating with the heater electrode 50 enables the corrosion to be efficiently suppressed.

Furthermore, in the configuration of the ozone generating apparatus 10, the discharge start voltage is made low due to the shape of the first discharge electrode 30 and the second discharge electrode 40, which are disposed so as to be opposed to each other, and the disposition of the dielectric layer 70, as described above. Accordingly, the voltage to be applied to the first discharge electrode 30 and the second discharge electrode 40 is capable of being set to a low value. Consequently, it is not necessary to set the resistance value of the heater electrode 50 to a substantially high value. In contrast, the heater electrode 50 has withstanding voltage higher than that of the chip resistor or the like due to the above shape, thus easily realizing high resistance.

Accordingly, the use of the configuration of the ozone generating apparatus 10 according to the present embodiment enables the discharge and the heating to be stably realized even in the aspect in which one power supply 90 is used, as described above, to realize high reliability.

The heater electrode 50 may be disposed at a position along the way in the thickness direction of the housing 20, that is, in the laminating direction of the multiple insulating layers 201, 202, 203, and 204, instead of the rear face of the housing 20.

An ozone generating apparatus according to a second embodiment will now be described with reference to the drawing. Fig. 4 is a functional block diagram of the ozone generating apparatus according to the second embodiment of the present invention.

As illustrated in Fig. 4, an ozone generating apparatus 100 differs from the ozone generating apparatus 10 according to the first embodiment in that the ozone generating apparatus 100 additionally includes the power supply 90. The same reference numerals are used in Fig. 4 to identify the same components as in the ozone generating apparatus 10 according to the first embodiment.

The structure of the ozone generating apparatus 10 according to the first embodiment is adopted as a portion where the ozone is generated (including a heating portion) in the ozone generating apparatus 100.

The power supply 90 includes a direct-current (DC) power supply 901, a voltage switching circuit 902, a reference voltage generating circuit 903, a comparison circuit 904, an oscillation circuit 905, an oscillation transistor 906, a transformer 907, a DC constant voltage power supply 908, and an output voltage detection circuit 909.

The DC power supply 901 supplies certain DC power supply voltage (for example, 12 V) to the voltage switching circuit 902. The voltage switching circuit 902 performs voltage conversion of the DC power supply voltage to output either of first DC voltage and second DC voltage. The first DC voltage is higher than the second DC voltage. For example, the first DC voltage has a value of 5 V and the second DC voltage has a value of 3 V. The voltage switching circuit 902 supplies the first DC voltage or the second DC voltage to the reference voltage generating circuit 903. The reference voltage generating circuit 903 generates reference voltage corresponding to the first DC voltage or the second DC voltage and supplies the generated reference voltage to the comparison circuit 904.

A detection coil 973 of the transformer 907 generates voltage proportional to output voltage, and the output voltage detection circuit 909 detects this voltage. The output voltage detection circuit 909 supplies the detected voltage to the comparison circuit 904.

The comparison circuit 904 compares the detected voltage from the output voltage detection circuit 909 with the reference voltage to supply the result of comparison to the oscillation circuit 905. The output voltage (the voltage generated at a secondary coil 972 of the transformer 907) is capable of being adjusted to a low value if the reference voltage in the comparison circuit 904 is set to a high value and the output voltage (the voltage generated at the secondary coil 972 of the transformer 907) is capable of being adjusted to a high value if the reference voltage in the comparison circuit 904 is set to a low value. This enables the output voltage to be stably generated.

The oscillation circuit 905 supplies base voltage corresponding to the result of comparison to the oscillation transistor 906.

A collector of the oscillation transistor 906 is connected to one end of a primary coil 971. An emitter of the oscillation transistor is grounded and the other end of the primary coil 971 is grounded via the DC constant voltage power supply 908. The oscillation transistor 906 supplies current to the primary coil 971 of the transformer 907 in accordance with the base voltage. In other words, LC oscillation is used here, which uses the inductance of the transformer 907 and the capacitance caused by the distributed capacitance of the transformer and the structure of the portion where the ozone is generated (the structure of the ozone generating apparatus 10 according to the first embodiment). The voltage value of the output voltage is controlled based on the base voltage supplied from the oscillation circuit 905 to the oscillation transistor 906.

The secondary coil 972 of the transformer 907 is connected to the external connection electrodes 61 and 62 in the portion where the ozone is generated (the ozone generating apparatus 10 according to the first embodiment). The external connection electrode 62 is grounded.

In the above configuration, during a period in which the discharge is performed, the voltage switching circuit 902 outputs the first DC voltage. Accordingly, voltage (V1 in Fig. 3) higher than the discharge start voltage is supplied to the secondary coil 972 of the transformer 907 and, then, is supplied to the external connection electrodes 61 and 62. As a result, the discharge occurs between the first discharge electrode 30 and the second discharge electrode 40 and the heating with the heater electrode 50 is performed. In contrast, during a period in which the discharge is not performed, the voltage switching circuit 902 outputs the second DC voltage. Accordingly, voltage (V2 in Fig. 3) lower than the discharge start voltage is supplied to the secondary coil 972 of the transformer 907 and, then, is supplied to the external connection electrodes 61 and 62. As a result, the discharge does not occur between the first discharge electrode 30 and the second discharge electrode 40 and only the heating with the heater electrode 50 is performed.

As described above, the use of the configuration of the ozone generating apparatus 100 according to the present embodiment enables the discharge to be performed only during a period in which the discharge is required and enables the heating to be continuously performed regardless of whether the discharge is performed. In addition, the ozone generating apparatus 100 is capable of alternately performing the period in which the discharge is performed and the period in which the discharge is not performed and is capable of easily realizing this switching. The ozone generating apparatus 100 is capable of efficiently realizing the discharge and the heating in accordance with the situation in the above manner.

Although the aspect in which the reference voltage is switched is indicated in the above description, the detection sensitivity of the output voltage from the output voltage detection circuit 909 may be switched.

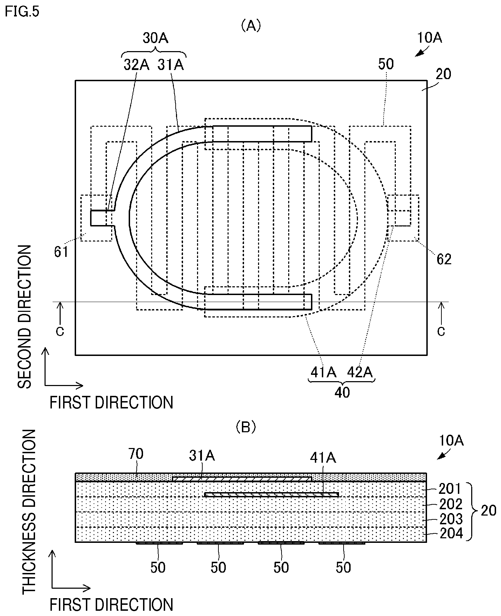

An ozone generating apparatus according to a third embodiment will now be described with reference to the drawings. Fig. 5(A) is a front view of the ozone generating apparatus according to the third embodiment of the present invention. Fig. 5(B) is a side cross-sectional view of the ozone generating apparatus according to the third embodiment of the present invention. Fig. 5(B) illustrates a cross-sectional view, taken along the C-C line in Fig. 5(A).

As illustrated in Fig. 5(A) and Fig. 5(B), an ozone generating apparatus 10A according to the present embodiment differs from the ozone generating apparatus 10 according to the first embodiment in the shapes and the arrangement of a first discharge electrode 30A and a second discharge electrode 40A. The remaining components in the ozone generating apparatus 10A are the same as those in the ozone generating apparatus 10 and a description of such components is omitted herein.

The first discharge electrode 30A is formed on the front face of the housing 20. The first discharge electrode 30A is composed of a main electrode 31A and a wiring electrode 32A. The main electrode 31A is formed into a U shape in a planar view. The wiring electrode 32A is disposed at one end side of the housing 20A with respect to the main electrode 31A in the first direction and is connected to the main electrode 31A. The wiring electrode 32A is connected to the external connection electrode 61 with an interlayer connection electrode (not illustrated) interposed therebetween.

The second discharge electrode 40A is formed in the housing 20. More specifically, the second discharge electrode 40A is formed on an interface between the insulating layer composing the housing 20 (the insulating layer forming the front face of the housing 20) 201 and the insulating layer 202 abutting against the insulating layer 201. The second discharge electrode 40A is composed of a main electrode 41A and a wiring electrode 42A. The main electrode 41A is formed into a U shape in a planar view. The main electrode 41A includes a portion that is overlapped with the main electrode 31A and a portion that is not overlapped with the main electrode 31A in a planar view. The wiring electrode 42A is disposed at the other end side of the housing 20A with respect to the main electrode 41A in the first direction and is connected to the main electrode 41A. The wiring electrode 42A is connected to the external connection electrode 62 with an interlayer connection electrode (not illustrated) interposed therebetween.

Also with the above configuration, the same effects and advantages as those in the first embodiment are achieved. In addition, the power supply 90 according to the second embodiment may be used for the ozone generating apparatus 10A according to the present embodiment and the same effects and advantages as those in the second embodiment are achieved.

In the above embodiments, the heater electrode 50 may be formed of a positive temperature coefficient thermistor. In this case, the second resistance value is easily made higher than the first resistance value in a voltage range higher than the discharge start voltage and the second resistance value is easily made lower than the first resistance value in a voltage range lower than the discharge start voltage. In addition, it is possible to suppress excessive heating.

### Reference Signs List

- 10, 10A: ozone generating apparatus
- 20, 20A: housing
- 30, 30A: first discharge electrode
- 31: electrode finger
- 31A: main electrode
- 32: wiring electrode
- 32A: electrode
- 40, 40A: second discharge electrode
- 41: electrode finger
- 41A: main electrode
- 42: wiring electrode
- 50: heater electrode
- 61: external connection electrode
- 62: external connection electrode
- 70: dielectric layer
- 81, 82: interlayer connection electrode
- 90: power supply
- 100: ozone generating apparatus
- 201 to 204: insulating layer
- 901: DC power supply
- 902: voltage switching circuit
- 903: reference voltage generating circuit
- 904: comparison circuit
- 905: oscillation circuit
- 906: oscillation transistor
- 907: transformer
- 908: DC constant voltage power supply
- 909: output voltage detection circuit
- 971: primary coil
- 972: secondary coil
- 973: detection coil
- Vdch0: discharge start voltage
- Vdch1: discharge start voltage

## Claims

1. An ozone generating apparatus comprising:
a first discharge electrode and a second discharge electrode that generate ozone through discharge;
a heater electrode having a first end connected to the first discharge electrode and a second end connected to the second discharge electrode; and
one power supply that applies voltage between the first end and the second end,
wherein, when a current path that connects the first end to the second end through the first discharge electrode and the second discharge electrode is referred to as a first path, a ratio of voltage with respect to current through the first path is referred to as a first resistance value, a current path that connects the first end to the second end through the heater electrode is referred to as a second path, and a ratio of voltage with respect to current through the second path is referred to as a second resistance value, the second resistance value is higher than the first resistance value in a voltage range higher than discharge start voltage at which the discharge occurs between the first discharge electrode and the second discharge electrode.

2. The ozone generating apparatus according to Claim 1,
wherein the second resistance value is lower than the first resistance value in a voltage range lower than the discharge start voltage.

3. The ozone generating apparatus according to Claim 1 or 2,
wherein each of the first discharge electrode and the second discharge electrode includes a plurality of electrode fingers, and
wherein the plurality of electrode fingers of the first discharge electrode and the plurality of electrode fingers of the second discharge electrode are alternately disposed so as to be opposed to each other along a certain direction.

4. The ozone generating apparatus according to any of Claims 1 to 3, further comprising:
an insulating housing on which the first discharge electrode, the second discharge electrode, and the heater electrode are formed; and
a dielectric layer disposed on a front face of the housing,
wherein the first discharge electrode and the second discharge electrode are disposed on the front face of the housing in a shape in which the first discharge electrode and the second discharge electrode are covered with the dielectric layer.

5. The ozone generating apparatus according to any of Claims 1 to 4,
wherein the heater electrode is formed of a positive temperature coefficient thermistor.

6. The ozone generating apparatus according to any of Claims 1 to 5,
wherein the heater electrode has a plurality of bending portions.

7. A method using the ozone generating apparatus according to any of Claims 1 to 6, **characterized in that** the power supply applies voltage higher than the discharge start voltage.

8. The method according to Claim 7,
wherein the power supply alternately has a first period in which voltage higher than the discharge start voltage is applied and a second period in which voltage lower than the discharge start voltage is applied.

## Patentansprüche

1. Ozonerzeugungsvorrichtung, aufweisend:
eine erste Entladungselektrode und eine zweite Entladungselektrode, die Ozon durch Entladung erzeugen;
eine Heizelektrode mit einem ersten Ende, das mit der ersten Entladungselektrode verbunden ist, und einem zweiten Ende, das mit der zweiten Entladungselektrode verbunden ist; und
eine Stromversorgung, die eine Spannung zwischen dem ersten Ende und dem zweiten Ende anlegt,
wobei, wenn ein Strompfad, der das erste Ende mit dem zweiten Ende durch die erste Entladungselektrode und die zweite Entladungselektrode verbindet, als erster Pfad bezeichnet wird, ein Verhältnis von Spannung in Bezug auf Stromstärke durch den ersten Pfad als erster Widerstandswert bezeichnet wird, ein Strompfad, der das erste Ende mit dem zweiten Ende durch die Heizelektrode verbindet, als zweiter Pfad bezeichnet wird, und ein Verhältnis von Spannung in Bezug auf Stromstärke durch den zweiten Pfad als zweiter Widerstandswert bezeichnet wird, der zweite Widerstandswert höher ist als der erste Widerstandswert in einem Spannungsbereich, der höher ist als die Entladungsstartspannung, bei der die Entladung zwischen der ersten Entladungselektrode und der zweiten Entladungselektrode auftritt.

2. Ozonerzeugungsvorrichtung nach Anspruch 1, wobei der zweite Widerstandswert niedriger ist als der erste Widerstandswert in einem Spannungsbereich, der niedriger ist als die Entladungsstartspannung.

3. Ozonerzeugungsvorrichtung nach Anspruch 1 oder 2,
wobei die erste Entladungselektrode und die zweite Entladungselektrode jeweils eine Vielzahl von Elektrodenfingern aufweisen, und
wobei die Vielzahl von Elektrodenfingern der ersten Entladungselektrode und die Vielzahl von Elektrodenfingern der zweiten Entladungselektrode derart abwechselnd angeordnet sind, dass sie einander entlang einer bestimmten Richtung gegenüberliegen.

4. Ozonerzeugungsvorrichtung nach einem der Ansprüche 1 bis 3, ferner aufweisend:
ein Isolationsgehäuse, an dem die erste Entladungselektrode, die zweite Entladungselektrode und die Heizelektrode gebildet sind; und
eine dielektrische Schicht, die an einer Vorderfläche des Gehäuses angeordnet ist,
wobei die erste Entladungselektrode und die zweite Entladungselektrode an der Vorderfläche des Gehäuses in einer Form angeordnet sind, bei der die erste Entladungselektrode und die zweite Entladungselektrode mit der dielektrischen Schicht bedeckt sind.

5. Ozonerzeugungsvorrichtung nach einem der Ansprüche 1 bis 4,
wobei die Heizelektrode aus einem Kaltleiter gebildet ist.

6. Ozonerzeugungsvorrichtung nach einem der Ansprüche 1 bis 5,
wobei die Heizelektrode eine Vielzahl von Biegeabschnitten aufweist.

7. Verfahren unter Verwendung der Ozonerzeugungsvorrichtung nach einem der Ansprüche 1 bis 6, **dadurch gekennzeichnet, dass** die Stromversorgung eine Spannung anlegt, die höher als die Entladungsstartspannung ist.

8. Verfahren nach Anspruch 7,
wobei die Stromversorgung abwechselnd eine erste Periode, in der eine Spannung angelegt wird, die höher ist als die Entladungsstartspannung, und eine zweite Periode besitzt, in der eine Spannung angelegt wird, die niedriger ist als die Entladungsstartspannung.

## Revendications

1. Appareil de génération d'ozone, comprenant :
une première électrode de décharge et une seconde électrode de décharge, lesquelles génèrent de l'ozone par le biais d'une décharge ;
une électrode chauffante ayant une première extrémité connectée à la première électrode de décharge et une seconde extrémité connectée à la seconde électrode de décharge, et
une alimentation électrique, laquelle applique une tension entre la première extrémité et la seconde extrémité,
dans lequel lorsqu'un trajet de courant, lequel connecte la première extrémité à la seconde extrémité par le biais de la première électrode de décharge et de la seconde électrode de décharge, est désigné comme un premier trajet, un rapport de tension par rapport au courant à travers le premier trajet est désigné comme une première valeur ohmique ; un trajet de courant, lequel connecte la première extrémité à la seconde extrémité par le biais de l'électrode chauffante, est désigné comme un second trajet ; et un rapport de tension par rapport au courant à travers le second trajet de courant est désigné comme une seconde valeur ohmique, et la seconde valeur ohmique est supérieure à la première valeur ohmique dans une plage de tension supérieure à la tension de début de décharge à laquelle la décharge se produit entre la première électrode de décharge et la seconde électrode de décharge.

2. Appareil de génération d'ozone selon la revendication 1,
dans lequel la seconde valeur ohmique est inférieure à la première valeur ohmique dans une plage de tension inférieure à la tension de début de décharge.

3. Appareil de génération d'ozone selon la revendication 1 ou 2, dans lequel chacune des première électrode de décharge et seconde électrode de décharge inclut une pluralité de doigts d'électrode, et
dans lequel la pluralité de doigts d'électrode de la première électrode de décharge et la pluralité de doigts d'électrode de la seconde électrode de décharge sont disposées par alternance de manière à être opposées entre elles le long d'une certaine direction.

4. Appareil de génération d'ozone selon l'une quelconque des revendications 1 à 3, comprenant en outre :
un logement isolant sur lequel la première électrode de décharge, la seconde électrode de décharge, et l'électrode chauffante sont formées, et
une couche diélectrique disposée sur une face avant du logement,
dans lequel la première électrode de décharge et la seconde électrode de décharge sont disposées sur la face avant du logement avec une forme suivant laquelle la première électrode de décharge et la seconde électrode de décharge sont recouvertes de la couche diélectrique.

5. Appareil de génération d'ozone selon l'une quelconque des revendications 1 à 4,
dans lequel l'électrode chauffante est formée d'une thermistance à coefficient de température positif.

6. Appareil de génération d'ozone selon l'une quelconque des revendications 1 à 5,
dans lequel l'électrode chauffante présente une pluralité de portions de courbure.

7. Procédé utilisant l'appareil de génération d'ozone selon l'une quelconque des revendications 1 à 6, **caractérisé en ce que** l'alimentation électrique applique une tension supérieure à la tension de début de décharge.

8. Procédé selon la revendication 7,
dans lequel l'alimentation électrique présente par alternance une première période, où la tension supérieure à la tension de début de décharge est appliquée, et une seconde période, où une tension inférieure à la tension de début de décharge est appliquée.
